# EUROPÄISCHE PATENTANMELDUNG

(11) **EP 1 067 066 A1**
(43) Veröffentlichungstag der Anmeldung: **10.01.2001**
(21) Anmeldenummer: 00112033.6
(22) Anmeldetag: 02.06.2000
(51) Int. Cl.: B65G 19/02, B61B 10/02

(54) **Hängefördereinrichtung**

(30) Priorität: 07.06.1999 DE 19925911
(71) Anmelder: WF Logistik GmbH, 86899 Landsberg (DE)
(72) Erfinder: Philippin, Holger, 82194 Gröbenzell (DE)
(74) Vertreter: Tiesmeyer, Johannes, Dr.

(57) **Zusammenfassung**

Es wird eine Hängefördereinrichtung vorgeschlagen, die wenigstens eine Laufschiene (3) zur Führung daran hängend abgestützter, beweglicher Fördergutträger längs einer Förderstrecke und ein längs der Laufschiene (3) geführt bewegbares Antriebsband (21) zur Mitnahme der Fördergutträger (5) längs der Förderstrecke aufweist, wobei die an der Laufschiene (3) geführten Fördergutträger (5) seitlich mit dem Antriebsband (21) in Verbindung stehen. Das Antriebsband (21) weist einen Bandkörper (23, 25, 29) und eine Vielzahl daran drehbar gelagerter und in Bandlängsrichtung aufeinanderfolgender Kontaktrollen (27) zur seitlichen Berührung der zu fördernden Fördergutträger (5) auf. Vorzugsweise handelt es sich bei dem Bandkörper um eine Laschenkette, bei der Laschen (23) durch Bolzen (25) gelenkig miteinander verbunden sind, wobei auf jedem Bolzen (25) koaxial zur Bolzenachse eine Kontaktrolle (27) vorgesehen ist.

## Beschreibung

Die Erfindung betrifft eine Hängefördereinrichtung mit wenigstens einer Laufschiene zur Führung daran hängend abgestützter, beweglicher Fördergutträger längs einer Förderstrecke und mit einem längs der Laufschiene geführt bewegbaren Antriebsband zur Mitnahme der Fördergutträger längs der Förderstrecke, wobei die an der Laufschiene geführten Fördergutträger seitlich mit dem Antriebsband in Verbindung stehen.

Eine Hängefördereinrichtung der vorstehend genannten Art ist beispielsweise aus der EP 0 623 497 B1 bekannt. Die Fördergutträger dieser bekannten Fördereinrichtung sind sogenannte Bügelträger zum Transport von an Kleiderbügeln hängenden Kleidungsstücken. Jeder Bügelträger ist im Förderbetrieb mit einer von zwei symmetrisch zu einer vertikalen Mittenebene von dem Trägerkörper abstehenden Laufrolle an einer Laufschiene der Fördereinrichtung seitlich angehängt, wobei die Laufrolle an einer Lauffläche der Schiene zur Bewegung in Schienenlängsrichtung geführt ist. Unterhalb der Laufrollen stehen symmetrisch zu der vertikalen Längsmittenebene zwei starre Vorsprünge seitlich von dem Trägerkörper ab, deren nach außen weisende Flächen als Reibflächen für einen Reibbandantrieb ausgebildet sind. Die jeweils der Laufschiene zugewandte Reibfläche steht im Förderbetrieb mit einem Reibband in Antriebsverbindung, das in einer Führung der Laufschiene in Schienenlängsrichtung verläuft. Das längs der Schiene bewegte Reibband nimmt den Fördergutträger über die reibschlüssige Kopplung zwischen Reibfläche und Reibband mit, wobei die an der Schiene geführte Laufrolle des Fördergutträgers an der Lauffläche der Laufschiene abrollt.

Bei der bekannten Hängefördereinrichtung handelt es sich um einen staufähigen Power-and-free-Förderer, bei dem eine Gruppe von gleichartigen Fördergutträgern in einem Staubereich bei weiterlaufendem Reibband aufgestaut werden kann. Um zu vermeiden, daß die Reibflächen der im Stau befindlichen Fördergutträger an dem weiterlaufenden Reibband schleifen, weisen die Fördergutträger jeweils eine Trenneinrichtung zum zeitweisen Lösen der Antriebsverbindung auf. Die Trenneinrichtung eines Fördergutträgers wird im Staufall von einem im Stau benachbarten Fördergutträger aktiviert, wobei der Fördergutträger um einen geringen Betrag relativ zur Laufschiene derart verschwenkt wird, daß seine Reibfläche von dem Reibband freikommt oder zumindest mit reduziertem Anlagedruck am Reibband anliegt.

Ein Nachteil dieser bekannten Hängefördereinrichtung ist darin zu sehen, daß jeder Fördergutträger mit einer Trenneinrichtung aus bewegbaren Elementen ausgerüstet sein muß, was mit einer entsprechenden Erhöhung der Herstellungskosten der Fördergutträger einhergeht. Darüber hinaus liegt ein Nachteil der bekannten Fördereinrichtung darin, daß vergleichsweise große Kräfte erforderlich sind, um den Fördergutträger insgesamt so zu verschwenken, daß er im Stau zuverlässig vom Reibband freikommt. Insbesondere bei größerer Gewichtsbelastung durch das zu transportierende Fördergut sind die zum Freischalten des Fördergutträgers erforderlichen Kräfte so groß, daß sie erst bei erheblichem Staudruck einer größeren Anzahl nachrückender Bügelträger aufgebracht werden können. Die Kräfte zum Freischalten, d.h. zum Verschwenken der Fördergutträger relativ zur Laufschiene, sind aufgrund der Abhängigkeit von der Gewichtsbelastung des Fördergutträgers nicht sehr gut definierbar, so daß die bei Stau geforderte Abkopplung von dem Reibband nicht immer zuverlässig und häufig erst mit Verzögerung, also nach Aufbau eines hinreichend großen Staudrucks, erfolgt. Bei verzögerter oder unvollständiger Abkopplung des Fördergutträgers von dem Reibband besteht die Gefahr eines verstärkten Abriebs an der Reibfläche und einer starken Erhitzung durch Reibungswärme sowohl am Bügelträger als auch am Reibband. Ferner wird das Reibband durch das Schleifen der Reibflächen stärker belastet, so daß der Reibbandantrieb so dimensioniert sein muß, daß er eine derartige Belastung überwinden kann.

Es sind auch bereits Hängefördereinrichtungen bekannt, bei denen anstelle eines Reibbandes eine Laschenkette als Antriebsband verwendet wird.

Der Erfindung liegt die Aufgabe zugrunde, eine Hängefördereinrichtung der eingangs genannten Art mit einem Antriebssystem für Fördergutträger bereitzustellen, welches unterschiedlichen Antriebssituationen gerecht werden kann und bei dem die einzelnen Fördergutträger keine eigenen Trenneinrichtungen aufweisen müssen, um einen verschleißarmen Staubetrieb zu ermöglichen.

Ausgehend von einer Hängefördereinrichtung mit den Merkmalen des Oberbegriffs des Anspruchs 1 wird zur Lösung dieser Aufgabe vorgeschlagen, daß das Antriebsband einen Bandkörper und eine Vielzahl an dem Bandkörper drehbar gelagerter und in Bandlängsrichtung aufeinanderfolgender Kontaktrollen zur seitlichen Berührung der zu fördernden Fördergutträger aufweist.

Vorzugsweise handelt es sich bei dem Bandkörper um eine Kette, nämlich um eine Laschenkette, bei der Laschen durch Bolzen gelenkig miteinander verbunden sind, wobei auf jedem Bolzen koaxial zur Bolzenachse eine jeweilige drehbare Kontaktrolle vorgesehen ist.

Die Mitnahmekopplung zwischen Antriebsband und Fördergutträger erfolgt gemäß einer bevorzugten Ausgestaltung der Erfindung über reibschlüssigen Flächenkontakt zwischen einer betreffenden Reibfläche des Fördergutträgers und dem Umfang der von dem Fördergutträger beaufschlagten Kontaktrolle.

Bei einem Förderbetrieb mit freien Kontaktrollen, d.h. nicht zwangsweise in Drehung versetzten Kontaktrollen, ist die Lagerreibung der Kontaktrollen so eingestellt, daß das von einer Antriebsquelle zur Bewegung längs der Laufschiene angetriebene Antriebsband über die reibschlüssige Berührung zwischen der Umfangsfläche einer jeweiligen Kontaktrolle und der daran anliegenden Reibfläche eines betreffenden Fördergutträgers den jeweiligen Fördergutträger längs der Förderstrecke mitnimmt, ohne daß es zu einer abwälzenden Drehung der jeweiligen Kontaktrolle kommt. Wird nun der betreffende Fördergutträger im Falle eines Staus abgebremst, so kann die von ihm beaufschlagte Kontaktrolle eine den Fördergutträger abwälzende und freigebende Drehbewegung bei weiterhin translatorisch längs der Laufschienenanordnung bewegtem Antriebsband ausführen. Der betrachtete Fördergutträger kommt dann mit der nächsten Kontaktrolle des Antriebsbands in Kontakt, die ebenfalls eine Drehung ausführt, um in einer die Reibungsfläche des Fördergutträgers schonenden Weise an dem Fördergutträger vorbeizukommen. Sobald der den Fördergutträger an der Weiterfahrt behindernde Widerstand bei Auflösung des Staus aufgehoben ist, kommt es wieder zur Mitnahme des Fördergutträgers durch das Antriebsband. Der vorstehend erläuterte Antriebsmodus ermöglicht somit bedarfsweises Aufstauen einer Gruppe von Fördergutträgern bei weiterlaufendem Antriebsband. Die Fördergutträger müssen hierzu nicht mit eigenen Trenneinrichtungen bzw. Freischaltkupplungen ausgestattet sein, wie sie eingangs unter Bezugnahme auf den Stand der Technik erläutert wurden. Dennoch ist die Verschleißbeanspruchung der Reibflächen der Fördergutträger im Falle eines Staus gering.

Eine Hängefördereinrichtung nach der Erfindung ermöglicht auch die Realisierung eines alternativen Antriebskonzeptes für die Fördergutträger, wobei die Kontaktrollen in einem betrachteten Förderstreckenbereich nicht frei sind, sondern auf einer Abrollfläche abrollen, welche an der Seite des Antriebsbandes liegt, die der Seite entgegengesetzt ist, an der die Kontaktrollen von Fördergutträgern an der Laufschiene beaufschlagt werden können. Die Kontaktrollen führen somit zwangsweise eine Drehbewegung aus, die der Vorschubbewegung des Antriebsbandes überlagert ist. Dies führt dazu, daß zur Mitnahme an das Antriebsband angekoppelte Fördergutträger von Kontaktrolle zu Kontaktrolle vorgeschoben werden und somit eine Translationsgeschwindigkeit annehmen, die größer ist als die Vorschubgeschwindigkeit des Bandkörpers. Sollen nun Staubereiche auf der Förderstrecke vorgesehen sein, so wird vorgeschlagen, die Kontaktrollen in diesen Staubereichen nicht an einer Abrollfläche der vorstehend genannten Art abrollen zu lassen. Die Kontaktrollen können dann frei die im Staufall erforderliche Abwälzbewegung zur Freigabe der Fördergutträger ausführen.

Eine weitere Möglichkeit der Realisierung eines Antriebskonzepts liegt darin, die Abrollfläche zur zwangsweisen Drehung der Kontaktrollen an einem Schaltelement oder ggf. mehreren Schaltelementen vorzusehen, wobei das betreffende Schaltelement gesteuert zwischen einer wirksamen Stellung, in der es an die Kontaktrollen herangeführt ist, und einer unwirksamen Stellung, in der es von den Kontaktrollen entfernt ist, bewegt werden kann. Eine auf diese Weise gesteuerte Zwangsdrehung der Kontaktrollen in einem bestimmten Förderstreckenbereich kann beispielsweise dazu ausgenutzt werden, Fördergutträger durch jeweilige Beschleunigung zu vereinzeln. Durch Überführung des Schaltelementes in die unwirksame Stellung kann dagegen bedarfsweise ein Staubereichin dem betreffenden Förderstreckenabschnitt eingerichtet werden.

Wie erwähnt, eignet sich eine mit den betreffenden Kontaktrollen ausgerüstete Laschenkette sehr gut als Antriebsband. Damit die Kontaktrollen mit großem Durchmesser ausgebildet werden können, wird vorgeschlagen, daß benachbart aufeinanderfolgende Kontaktrollen in Richtung der Kontaktrollenachsen wechselweise versetzt zueinander und in Bandlängsrichtung einander überlappend angeordnet sind.

Der Bandkörper des Antriebsbandes ist gemäß einer bevorzugten Ausführungsform der Erfindung in einer Führung an der Laufschiene so geführt, daß die Kontaktrollen mit einem radial äußeren Bereich über den seitlich äußeren Rand der Führung hinweg seitlich nach außen abstehen, um mit an der Laufschiene geführten Fördergutträgern in Berührung kommen zu können.

Bisher wurde vorausgesetzt, daß die Antriebskopplung zwischen Kontaktrollen und Fördergutträger reibschlüssig erfolgt. Denkbar ist auch, daß an den Kontaktrollen Eingriffselemente, etwa eine Verzahnung oder dgl., vorgesehen sind, die mit komplementären Eingriffselementen an den Fördergutträgern in Eingriff kommen können, um die Antriebskopplung zu realisieren.

Ein Ausführungsbeispiel der Erfindung wird nachstehend unter Bezugnahme auf die Figuren näher erläutert.
- Fig. 1: zeigt in einer perspektivischen Darstellung einen Fördergutträger an einem Laufschienenabschnitt einer Fördereinrichtung nach der Erfindung mit einer speziellen Rollenkette als Antriebsband.
- Fig. 2: zeigt die Anordnung nach Fig. 1 mit Blickrichtung auf die Vorderseite des Fördergutträgers.
- Fig. 3: ist eine Vorderansicht entsprechend Fig. 2, wobei jedoch ein in Fig. 2 in einer unwirksamen Stellung befindliches Schaltelement in Fig. 3 an die Kontaktrollen der Antriebskette herangeführt ist.

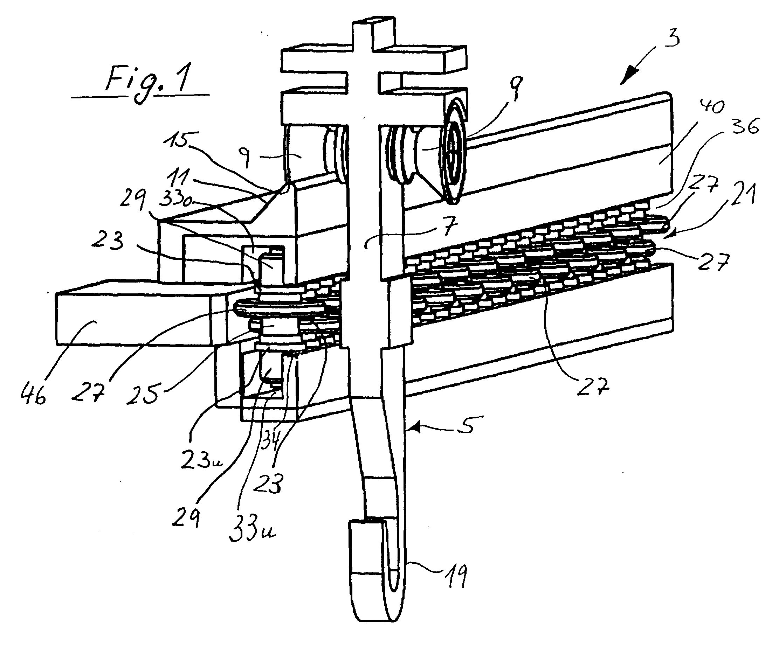

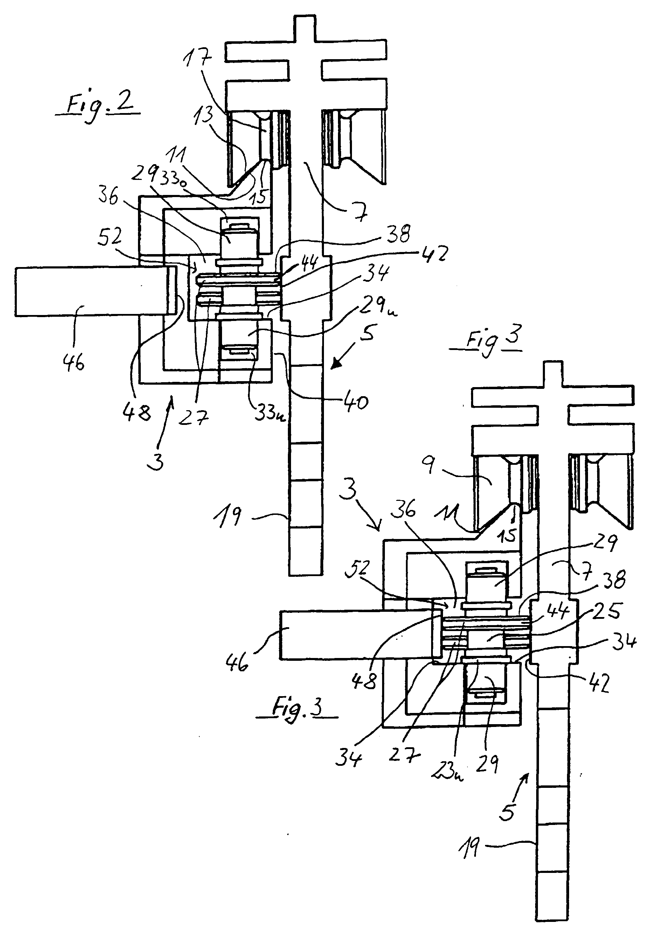

In Fig. 1 ist ein Abschnitt einer Laufschienenanordnung 3 erkennbar, an der ein Fördergutträger 5 mit einer seiner beiden am Trägerkörper 7 einander entgegengesetzt angeordneten Laufrollen 9 seitlich angehängt ist. Wie insbesondere in den Figuren 2 und 3 erkennbar, hat die Laufschienenanordnung 3 eine obere Schrägfläche 11, die der Kontur 13 des kegelstumpfförmigen Bereichs der Laufrollen 9 im wesentlichen komplementär ist und die der damit in Eingriff stehenden Laufrolle 9 eines betreffenden Fördergutträgers als Führung und Abrollfläche dient. Die Schrägfläche 11 geht am oberen Rand der Laufschienenanordnung 3 in einen abgerundeten Scheitelbereich 15 über, mit dem die Laufschienenanordnung 3 in eine Kehle 17 einer betreffenden Laufrolle 9 eingreift. Der Fördergutträger 5 weist an seinem unteren Ende einen Haken 19 auf, an den das zu transportierende Fördergut angehängt werden kann. Üblicherweise werden Fördergutträger 5 der in den Figuren dargestellten Art zum Transport von an Kleiderbügeln hängenden Kleidungsstücken verwendet, wobei der Haken des betreffenden Kleiderbügels in den Haken 19 des Fördergutträgers 5 eingehängt ist.

Eine "Rollenkette" 21, von der in Fig. 1 lediglich ein Abschnitt der Länge des gezeigten Abschnitts der Laufschienenanordnung 3 dargestellt ist, dient als Antriebsband für an der Laufschienenanordnung 3 geführte und in Längsrichtung der Laufschienenanordnung 3 zu transportierende Fördergutträger 5. Die auch als Stauförderkette bezeichnete Rollenkette 21 ist vom Aufbau her eine Laschenkette mit Laschen 23, welche durch Bolzen 25 gelenkig miteinander verbunden sind. Bei dem gezeigten Ausführungsbeispiel sind die Laschen 23 und die Bolzen 25 aus Metall, vorzugsweise Stahl, hergestellt. Auf jedem Bolzen 25 ist jeweils eine drehbar gelagerte Kontaktrolle 27 zur seitlichen Berührung zu transportierender Fördergutträger 5 angeordnet, wobei die jeweilige Kontaktrolle 27 und der ihr zugeordnete Bolzen 25 koaxial zueinander liegen. Die Kontaktrollen sind vorzugsweise aus Kunststoff hergestellt. Einander benachbarte Kontaktrollen 27 überlappen einander in Kettenlängsrichtung, wobei sie in axialer Richtung der Bolzen 25 wechselweise gegeneinander versetzt sind. Bei horizontal verlaufender Förderstrecke verlaufen die Rollenachsen bei dem gezeigten Ausführungsbeispiel vertikal.

Jeder Bolzen 25 weist zwei axial äußere Abschlußhülsen 29 auf, die ggf. drehbar gelagert sein können. Die einander entgegengesetzt an den axialen Enden der Bolzen 25 vorgesehenen Abschlußhülsen 29 greifen in jeweils zugeordnete Kettenführungsnuten 33o und 33u ein, die in der Laufschienenanordnung 3 einander gegenüberliegend vorgesehen sind. Die Kettenführungsnuten 33o und 33u erstrecken sich längs der Laufschienenanordnung 3, so daß die Rollenkette 21 längs der Förderstrecke geführt ist. Die Rollenkette 21 stützt sich mit den unteren Laschen 23u an den oberen Randflächen 34 der unteren Führungsnut 33u ab.

Die Kontaktrollen 27 befinden sich in der Ausnehmung 36 der Laufschienenanordnung 3, wobei jedoch ein radial äußerer Bereich 38 der Kontaktrollen 27 über die seitliche Randfläche 40 der Laufschienenanordnung 3 hinaus seitlich nach außen absteht, so daß die Kontaktrollen 27 in diesem Bereich 38 von einer seitlichen Kontaktfläche 42 eines betreffenden Fördergutträgers 5 in der in den Figuren gezeigten Weise beaufschlagt werden kann. Aufgrund der einseitigen Aufhängung eines jeweiligen Fördergutträgers 5 an der Lauffläche 11, 15 der Laufschienenanordnung 3 wird der Fördergutträger 5 mit seiner Kontaktfläche 42 gegen die Umfangsfläche 44 der benachbarten Kontaktrolle 27 der Rollenkette 21 gedrückt. Im Beispielsfall der Figuren 1 bis 3 ist die Lagerreibung zwischen den Kontaktrollen 27 und den Bolzen 25 so eingestellt, daß die von einer (nicht gezeigten) Antriebsquelle zur Bewegung längs der Laufschienenanordnung 3 angetriebene Rollenkette 21 über die reibschlüssige Berührung zwischen der Umfangsfläche 44 einer jeweiligen Kontaktrolle 27 und der daran anliegenden Kontaktfläche 42 eines betreffenden Fördergutträgers 5 den jeweiligen Fördergutträger 5 längs der Förderstrecke mitnehmen kann, ohne daß es zu einer abwälzenden Drehung der jeweiligen Kontaktrolle 27 kommt. Die Lagerreibung der Kontaktrollen 27 sollte also größer sein als die Lagerreibung der Laufrollen 9 bei dem betrachteten Belastungszustand des Fördergutträgers 5. Wird nun ein betreffender Fördergutträger 5 an seiner Weiterfahrt gehindert, etwa im Falle eines Staus von Fördergutträgern 5, so kann die von ihm beaufschlagte Kontaktrolle 27 der Rollenkette 21 eine den Fördergutträger 5 abwälzende und freigebende Drehbewegung bei weiterhin translatorisch längs der Laufschienenanordnung 3 bewegter Rollen kette 21 ausführen. Der Fördergutträger 5 kommt dann mit der nächsten Kontaktrolle 27 der Kette 21 in Kontakt, die ebenfalls eine Drehung ausführt, um in einer die Kontaktfläche 42 des Fördergutträgers 5 schonenden Weise an dem Fördergutträger 5 vorbeizukommen. Entsprechend verhalten sich alle folgenden Kontaktrollen 27, bis der Fördergutträger 5 nicht mehr an seiner Weiterfahrt gehindert ist.

Der Vorteil dieser Betriebsweise liegt darin, daß keine aufwendigen Trenneinrichtungen bzw. Freischaltkupplungen an den Fördergutträgern 5 vorgesehen sein müssen, um die Fördergutträger 5 im Staufall vom Antriebsband 21 abzukoppeln. Man gewinnt hierdurch größere Freiheiten bei der Gestaltung der Fördergutträger.

Bei der Rollenkette 21 handelt es sich vorzugsweise um eine Endloskette, die um wenigstens zwei Umlenkräder herumgeführt ist.

Mit 46 ist in den Fig. 1 - 3 ein Schaltelement gekennzeichnet, welches von der den Fördergutträgern 5 abgewandten Rückseite 52 der Rollenkette 21 her aus der in Fig. 2 gezeigten Passivstellung heraus an die Kontaktrollen 27 in der in Fig. 3 gezeigten Weise heranführbar ist. In der Stellung des Schaltelementes 46 gemäß Fig. 3 rollen die Kontaktrollen 27 zwangsläufig an der ihnen gegenüberliegenden Fläche 48 des Schaltelementes 46 ab. Die Kontaktrollen 27 erfahren somit eine Zwangsdrehung, was zur Folge hat, daß mit ihnen in Berührung stehende (ungebremste) Fördergutträger 5 ein zusätzliches Antriebsmoment aufgrund der Rollendrehung erfahren. Der betreffende Fördergutträger 5 erfährt eine Antriebsbewegung, die aus der Translationsbewegung der Rollenkette 21 und der dieser Translationsbewegung überlagerten Rotationsbewegung der Kontaktrollen 27 resultiert. Der Fördergutträger wird dabei von Kontaktrolle zu Kontaktrolle vorgeschoben. Eine solche Antriebsweise kann mit Vorteilen insbesondere bei Steigungen der Förderstrecke eingesetzt werden. In der in Fig. 2 gezeigten zurückgezogenen Passivstellung des Schaltelementes 46 sind die Kontaktrollen 27 wieder frei, abgesehen von etwaig anliegenden Fördergutträgern 5, die dann mit der Translationsgeschwindigkeit der Rollenkette 21 befördert werden können.

Das Schaltelement 46 kann sich in Längsrichtung der Laufschienenanordnung 3 über den Bereich einer größeren Anzahl von Kontaktrollen 27 erstrecken. Denkbar ist auch eine Aneinanderreihung von Schaltelementen 46, die unabhängig voneinander von einer betreffenden Steuereinrichtung steuerbar und somit zwischen den Zuständen gemäß Fig. 2 und Fig. 3 hin- und herschaltbar sind.

Gemäß einer Variante der in den Fig. 1 - 3 dargestellten Hängefördereinrichtung kann über längere Förderstreckenabschnitte hinweg eine der Abrollfläche 48 funktional entsprechende Abrollfläche fest installiert sein, beispielsweise im Bereich von Steigungen der Förderstrecke, um im Steigungsbereich eine wirksame Mitnahmekopplung zwischen Antriebsband und Fördergutträgern vorzusehen.

## Patentansprüche

1. Hängefördereinrichtung mit wenigstens einer Laufschiene (3) zur Führung daran hängend abgestützter, beweglicher Fördergutträger längs einer Förderstrecke und mit einem längs der Laufschiene (3) geführt bewegbaren Antriebsband (21) zur Mitnahme der Fördergutträger (5) längs der Förderstrecke, wobei die an der Laufschiene (3) geführten Fördergutträger (5) seitlich mit dem Antriebsband (21) in Verbindung stehen,
dadurch gekennzeichnet,
daß das Antriebsband (21) einen Bandkörper (23, 25, 29) und eine Vielzahl an dem Bandkörper (23, 25, 29) drehbar gelagerter und in Bandlängsrichtung aufeinanderfolgender Kontaktrollen (27) zur seitlichen Berührung der zu fördernden Fördergutträger (5) aufweist.

2. Hängefördereinrichtung nach Anspruch 1, dadurch gekennzeichnet, daß es sich bei dem Bandkörper (23, 25, 29) um eine Kette handelt.

3. Hängefördereinrichtung nach Anspruch 2, dadurch gekennzeichnet, daß die Kette eine Laschenkette ist, bei der Laschen (23) durch Bolzen (25) gelenkig miteinander verbunden sind, wobei auf jedem Bolzen (25) koaxial zur Bolzenachse eine jeweilige drehbare Kontaktrolle (27) vorgesehen ist.

4. Hängefördereinrichtung nach Anspruch 3, dadurch gekennzeichnet, daß benachbart aufeinanderfolgende Kontaktrollen (27) in Richtung der Kontaktrollenachsen wechselweise versetzt zueinander - und in Bandlängsrichtung einander überlappend angeordnet sind.

5. Hängefördereinrichtung nach einem der vorhergehenden Ansprüche, dadurch gekennzeichnet, daß der Bandkörper (23, 25, 29) in einer Führung (33, 36) an der Laufschiene (3) so geführt ist, daß die Kontaktrollen (27) mit einem radial äußeren Bereich (38) über den seitlich äußeren Rand (40) der Führung (33, 36) hinweg seitlich nach außen abstehen, um mit an der Laufschiene (3) geführten Fördergutträgern (5) in Berührung kommen zu können.

6. Hängefördereinrichtung nach einem der vorhergehenden Ansprüche, dadurch gekennzeichnet, daß zumindest in einem Längenabschnitt der Förderstrecke das Antriebsband (21) so geführt ist, daß die Kontaktrollen (27) an der Seite des Antriebsbandes (21), welche der von den Fördergutträgern (5) zu beaufschlagenden Seite entgegengesetzt ist, mit einer Abrollfläche (48) in Kontakt stehen, so daß sie zwangsweise bei Vorschub des Antriebsbandes (21) in Drehung versetzt werden.

7. Hängefördereinrichtung nach Anspruch 6, dadurch gekennzeichnet, daß die Abrollfläche (48) an wenigstens einem Schaltelement (46) vorgesehen ist und durch Steuerung des Schaltelementes (46) wahlweise von dem Antriebsband (21) entfernt bzw. an das Antriebsband herangeführt werden kann, um die Kontaktrollen (27) freizugeben bzw. zwangsweise in Drehung zu versetzen.
